# EUROPEAN PATENT APPLICATION

(11) **EP 3 754 776 A1**
(43) Date of publication of application: **23.12.2020**
(21) Application number: 19754958.7
(22) Date of filing: 06.02.2019
(51) Int. Cl.: H01M 10/36, H01M 4/36, H01M 4/48, H01M 10/38

(54) **SECONDARY CELL**

(30) Priority: 15.02.2018 JP 2018024790
(71) Applicant: Kabushiki Kaisha Nihon Micronics, Musashino-shi, Tokyo 180-8508 (JP)
(72) Inventor: TSUNOKUNI, Kazuyuki, Musashino-shi, Tokyo 180-8508 (JP); TONOKAWA, Takashi, Musashino-shi, Tokyo 180-8508 (JP); NAKADA, Kunihiko, Musashino-shi, Tokyo 180-8508 (JP); KOSAKA,Yutaka, Musashino-shi, Tokyo 180-8508 (JP)
(74) Representative: Samson & Partner Patentanwälte mbB
(86) International application number: PCT/JP2019/004165
(87) International publication number: WO 2019/159773

(57) **Abstract**

A secondary battery (30) includes: a solid electrolyte layer (18) including at least one of water (H₂O) and a hydroxyl group (-OH); a positive-electrode active material layer (22) disposed on an upper surface of the solid electrolyte layer and including nickel hydroxide as a positive-electrode active material; a second electrode (positive electrode) (26) disposed on an upper surface of the positive-electrode active material layer; a negative-electrode active material layer (16) disposed on a lower surface of the solid electrolyte layer so as to be opposite to the positive-electrode active material layer, and including a titanium oxide compound (TiO_{X}) including at least one of water (H₂O) and a hydroxyl group (-OH) as a negative-electrode active material; a first electrode (negative electrode) (12) disposed on a lower surface of the negative-electrode active material layer so as to be opposite to the second electrode (positive electrode) (26); a p type semiconductor layer (24) disposed between the positive-electrode active material layer and the second electrode (positive electrode); and an n type semiconductor layer (14) disposed between the negative-electrode active material layer and the first electrode (negative electrode). The secondary battery is provided in which an energy density is increased.

## Description

### TECHNICAL FIELD

The embodiments described herein relate to a secondary battery.

### BACKGROUND ART

As conventional secondary batteries, there have been proposed secondary batteries, in which a first electrode / an insulating material / an n type oxide semiconductor layer / a p type oxide semiconductor layer / a second electrode are layered, since electrolytic solutions and rare elements are not used and thinning thereof can be realized.

Moreover, as a structure similar to such secondary batteries, there have been proposed secondary batteries including: a positive electrode including a positive-electrode active material layer containing a nickel oxide or the like as a positive-electrode active material; a solid electrolyte having an aqueous porous structure; and a negative electrode including a negative-electrode active material layer containing a titanium oxide or the like as a negative-electrode active material.

Furthermore, there have also been proposed secondary batteries including a nickel oxide as a positive-electrode active material, a titanium oxide formed by sputtering as a negative-electrode active material, and a silicon oxide to which a metallic oxide is added as a solid electrolyte.
Patent Literature 1: Japanese Patent No. 5508542
Patent Literature 2: Japanese Patent No. 5297809
Patent Literature 3: Japanese Patent Application Laid-Open Publication No. 2015-82445
Patent Literature 4: Japanese Patent Application Laid-Open Publication No. 2016-82125
Patent Literature 5: Japanese Patent Application Laid-Open Publication No. 2017-147186

### SUMMARY OF INVENTION

### Technical Problem

The embodiments provide a secondary battery in which an energy density is increased.

### Solution to Problem

According to one aspect of the embodiments, there is provided a secondary battery comprising: a solid electrolyte layer including at least one of water (H₂O) and hydroxyl group (-OH); a positive-electrode active material layer disposed on an upper surface of the solid electrolyte layer, the positive-electrode active material layer containing nickel hydroxide as a positive-electrode active material; a second electrode disposed on an upper surface of the positive-electrode active material layer; a negative-electrode active material layer disposed on a lower surface of the solid electrolyte layer so as to be opposite to the positive-electrode active material layer, the negative-electrode active material layer containing a titanium oxide compound (TiO_{X}) including at least one of water (H₂O) and a hydroxyl group (-OH) as a negative-electrode active material; and a first electrode disposed on a lower surface of the negative-electrode active material layer so as to be opposite to the second electrode.

According to another aspect of the embodiments, there is provided a secondary battery further comprising a p type oxide semiconductor layer between the positive-electrode active material layer and the second electrode.

According to yet another aspect of the embodiments, there is provided a secondary battery further comprising an n type oxide semiconductor layer inserted between the negative-electrode active material layer and the first electrode.

### Advantageous Effects of Invention

According to the embodiments, there can be provided the secondary battery in which the energy density is increased.

### BRIEF DESCRIPTION OF THE DRAWINGS

[Fig. 1] A schematic cross-sectional structure diagram showing a secondary battery according to a first embodiment.
[Fig. 2] A schematic cross-sectional structure diagram showing a secondary battery according to a second embodiment.
[Fig. 3] A schematic cross-sectional structure diagram showing a secondary battery according to a third embodiment.
[Fig. 4] A diagram showing a relationship between a detailed structure and the amount of discharged charge, with regard to each of the secondary batteries according to the first to third embodiments and secondary batteries according to a comparative example.
[Fig. 5] A waveform example of a constant current discharge in each of the structures C to E.
[Fig. 6 shows an example of data of a valence change of Ni at a positive electrode side by XAFS measurement (discharged state and charged state, Ni K-edge XANES).
[Fig. 7] A diagram showing a relationship between an amount of generation of water and a temperature by Temperature Programmed Desorption-Mass Spectrometry (TPD-MS) of solid electrolytes 1 and 2 containing SnO (the curves S2 and S3) and a solid electrolyte not containing SnO (the curve S1).
[Fig. 8] An example of evaluation result of valence of Sn in the solid electrolyte layer by the XAFS measurement (discharged state and charged state, Sn K-edge X-ray Absorption Near Edge Structure (XANES)).
[Fig. 9] A Fourier transform infrared (FTIR) characteristic example in a case of applying (TiOₓ + SiOₓ) as a negative-electrode active material layer (the curve R) and a case of applying TiOₓ as a negative-electrode active material layer (the curve T).
[Fig. 10] An example of elemental compositions of a negative-electrode active material (TiOₓ + SiOₓ), a negative-electrode active material (TiOₓ), and an n type semiconductor (sputtered TiO₂).
[Fig. 11] An example of an evaluation result of valence by the XAFS measurement (Ti K-edge XANES) in a discharged state and a charged state.
[Fig. 12] An example of an evaluation result of valence by Absorption Fine Structure (XAFS) measurement in the discharged state and the charged state.
[Fig. 13] A diagram corresponding to an example of a pre-peak of a Ti K-edge XANES spectrum ((a) anatase, (b) titanium sulfate hydrate, (c) titanium sulfate aqueous solution (quadrivalent), (d) Ti ion dissolved in sulfuric acid (trivalent), (e) Ti ion dissolved in sulfuric acid (trivalent + quadrivalent)).
[Fig. 14] An example of constant current discharge waveforms in the structure D and a structure in which the n type oxide semiconductor layer is removed from the structure D.
[Fig. 15] An XRD characteristic example of a titanium oxide formed using sputtering technology.

### DESCRIPTION OF EMBODIMENTS

Next, the embodiments will be described with reference to drawings. In the description of the following drawings, the identical or similar reference sign is attached to the identical or similar part. However, it should be noted that the drawings are schematic and therefore the relation between thickness and the plane size and the ratio of the thickness differs from an actual thing. Therefore, detailed thickness and size should be determined in consideration of the following explanation. Of course, the part from which the relation and ratio of a mutual size differ also in mutually drawings is included.

Moreover, the embodiments shown hereinafter exemplify the apparatus and method for materializing the technical idea; and the embodiments do not specify the material, shape, structure, placement, etc. of each component part as the following. The embodiments may be changed without departing from the spirit or scope of claims.

In the embodiments shown hereinafter, the n type oxide semiconductor layer is abbreviated as a n type semiconductor layer, and the p type oxide semiconductor layer is abbreviated as a p type semiconductor layer, to be explained.

### [First Embodiment]

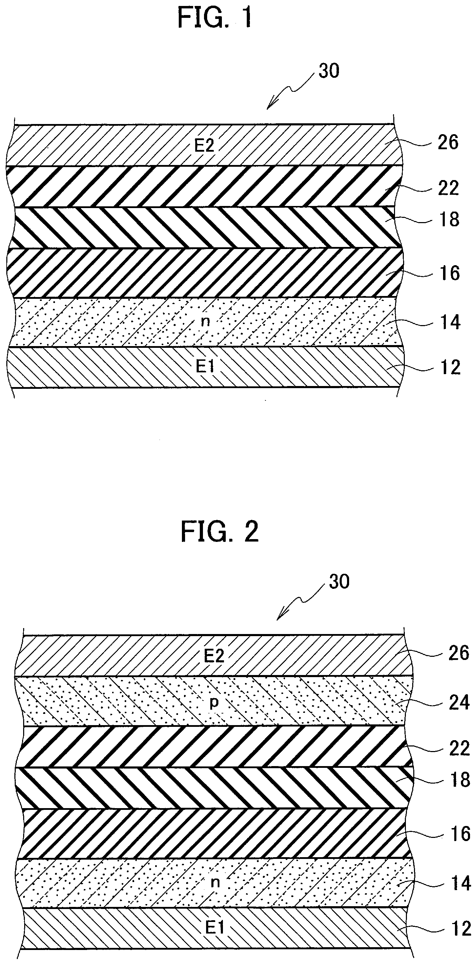

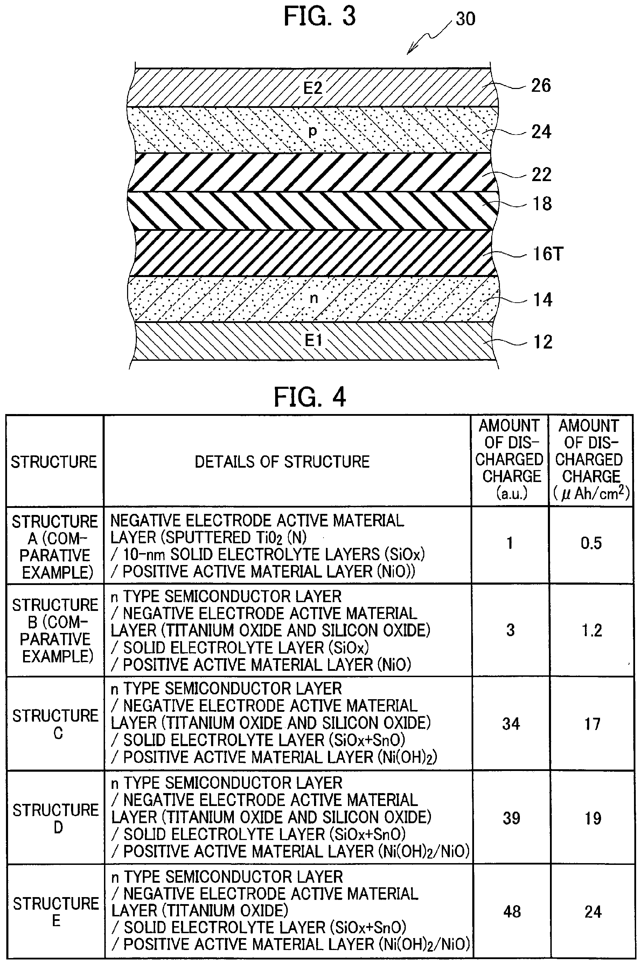

Fig. 1 shows a schematic cross-sectional structure of a secondary battery 30 according to a first embodiment.
The secondary battery 30 according to the first embodiment corresponds to a structure C (Fig. 4), and includes a configuration including a first electrode (E1) (negative electrode) 12 / an n type semiconductor layer 14 / a negative-electrode active material layer 16 / a solid electrolyte layer 18 / a positive-electrode active material layer 22 / a second electrode (E2) (positive electrode) 26.
Note that the first electrode (E1) (negative electrode) 12 may be referred to a lower electrode, and the second electrode (E2) (positive electrode) 26 may be referred to an upper electrode.

As shown in Fig. 1, the secondary battery 30 according to the first embodiment includes: a solid electrolyte layer 18 including at least one of water (H₂O) and a hydroxyl group (-OH); a positive-electrode active material layer 22 disposed on an upper surface of the solid electrolyte layer 18 and containing nickel hydroxide (Ni(OH)₂) as a positive-electrode active material; a second electrode (positive electrode) 26 disposed on an upper surface of the positive-electrode active material layer 22; a negative-electrode active material layer 16 disposed on a lower surface of the solid electrolyte layer 18 so as to be opposite to the positive-electrode active material layer 22, and including a titanium oxide (TiO_{X}) including at least one of water (H₂O) and a hydroxyl group (-OH) as a negative-electrode active material; and a first electrode (negative electrode) 12 disposed on a lower surface of the negative-electrode active material layer 16 so as to be opposite to the second electrode (positive electrode) 26.

The positive-electrode active material layer 22 may include a nickel oxide (NiO), metallic nickel (Ni), a cobalt hydroxide (Co(OH)₂), or the like.

The positive-electrode active material layer 22 includes at least the nickel hydroxide (Ni(OH)₂), and includes a structure in which at least one selected from the group consisting of a proton, a hydroxide ion (OH⁻), and a hydronium ion (H₃O⁺) can be transferred, and has a change in valence of nickel atoms during charge and discharge.

The negative-electrode active material layer 16 includes a titanium oxide compound (TiO_{X}) including at least one of water (H₂O) and a hydroxyl group (-OH) and a silicon oxide (SiOₓ), and includes a structure in which at least one selected from the group consisting of a proton, a hydroxide ion (OH⁻), and a preliminary hydronium ion (H₃O⁺) can be transferred, and has a change in valence of titanium atoms during the charge and discharge.

The above-mentioned titanium oxide compound may be formed by coating and firing titanium fatty acid.

The above-mentioned titanium oxide compound may include a mixture of trivalent and tetravalent titanium atoms, and may further include water (H₂O) or a hydroxyl group (-OH) around the titanium atoms. Furthermore, the above-mentioned titanium oxide compound may include an amorphous structure or a micro crystallite structure.

The solid electrolyte layer 18 may include a structure of including at least one of the water (H₂O) and the hydroxyl group (-OH) for ionic conduction by adding a metallic oxide to a silicon oxide. The silicon oxide has sufficient adhesion to the negative-electrode active material layer 16 and the positive-electrode active material layer 22.

Alternatively, the solid electrolyte layer 18 may include a silicon oxide added with a hydratable metal oxide in which at least one of hydroxide ion (OH⁻), such as a tantalum oxide, a tungsten oxide, a tin oxide, a phosphorus oxide, and an aluminium oxide, and a hydronium ion (H₃O⁺) can be transferred, for example. As the hydrated oxide, a tin oxide (II), a tantalum oxide, a zirconium dioxide, or an aluminium oxide may be applied. Furthermore, the solid electrolyte layer 18 may include phosphorus or a phosphorus oxide.

Alternatively, the solid electrolyte layer 18 may have at least one of a tantalum oxide, a zirconium dioxide, and aluminium oxide. Furthermore, the solid electrolyte layer 18 may include phosphorus or a phosphorus oxide.

It is also possible to form a high resistivity layer or insulation layer with respect to electrons, maintaining the transfer of ion by optimizing a film thickness of the solid electrolyte layer 18 and the amount of the metallic oxide to be added.

The n type semiconductor layer 14 is a titanium oxide (IV) including at least one of a rutile type or anatase type crystal structure. The n type semiconductor layer 14 is preferable to include at least one crystal structure of the rutile type crystal structure and the anatase type crystal structure, and to have a metal oxide semiconductor containing a small amount of water (H₂O) or a small amount of hydroxyl group (-OH).

The second electrode (positive electrode) may include Al, Ti, ITO, or Ni.

The first electrode (negative electrode) may include W, Ti, or ITO.

The positive-electrode active material layer 22 may be formed by depositing a nickel hydroxide through a wet process.

According to the first embodiment, there can be provided the secondary battery in which the energy density is increased.

### [Second Embodiment]

Fig. 2 shows a schematic cross-sectional structure of a secondary battery 30 according to a second embodiment.

The secondary battery 30 according to the second embodiment corresponds to a structure D (Fig. 4), and includes a configuration including a first electrode (E1) (negative electrode) 12 / a negative-electrode active material layer 16 / a solid electrolyte layer 18 / a positive-electrode active material layer 22 / a p type semiconductor layer 24/ a second electrode (E2) (positive electrode) 26.

The secondary battery 30 according to the second embodiment has a structure of inserting the p type semiconductor layer 24 on the positive-electrode active material layer 22 of the structure C. The details will now be described hereinafter.

As shown in Fig. 2, the secondary battery 30 according to the second embodiment includes the p type semiconductor layer 24 disposed between the positive-electrode active material layer and the second electrode (positive electrode).

The p type semiconductor layer 24 functions as a conductive hole transport layer and may include a nickel oxide (NiO) which, for example, having a crystal structure. Other configurations are the same as those of the first embodiment.

According to the second embodiment, there can be provided the secondary battery in which the energy density is increased.

### [Third Embodiment]

Fig. 3 shows a schematic cross-sectional structure of a secondary battery 30 according to a third embodiment. The secondary battery 30 according to the third embodiment corresponds to a structure E (Fig. 4), and includes a configuration including a first electrode (E1) (negative electrode) 12 / a n type semiconductor layer 14 / a negative-electrode active material layer 16T / a solid electrolyte layer 18 / a positive-electrode active material layer 22 / a p type semiconductor layer 24/ a second electrode (E2) (positive electrode) 26. The difference from the second embodiment is a point that the negative-electrode active material layer 16T has a titanium oxide compound (TiOₓ) but does not have a silicon oxide.

The p type semiconductor layer 24 functions as a conductive hole transport Layer, and may have a nickel oxide (NiO), for example. Other configurations are the same as those of the second embodiment.

According to the third embodiment, there can be provided the secondary battery in which the energy density is increased.

### (Relationship between Detailed Structure of Secondary Battery and Amount of Discharged Charge)

Fig. 4 shows a relationship between the combination of film quality (the negative-electrode active material and the solid electrolyte) and amount of discharged charge, in each of the detailed structures of the secondary batteries according to the first to third embodiments and the secondary batteries according to comparative examples. The secondary battery of the structure E is discharged for the longest time. The details will now be described hereinafter.

As shown in Fig. 4, the secondary battery according to a comparative example having a structure A (comparative example) includes a negative-electrode active material layer composed of a titanium oxide (TiO₂ (IV)) formed by a sputtering technology / a solid electrolyte layer composed of a silicon oxide (SiOₓ: 10 nm) formed from silicone oil / a positive-electrode active material layer composed of a nickel oxide (NiO) formed by the sputtering technology. The amount of discharged charge of the structure A is 0.5 µA/cm², for example.

As shown in Fig. 4, the secondary battery according to a comparative example having a structure B (comparative example) includes an n type semiconductor layer composed of a titanium oxide (TiO₂ (IV)) formed by the sputtering technology / a negative-electrode active material layer composed of a titanium oxide and a silicon oxide formed from titanium fatty acid and silicone oil / a solid electrolyte layer composed of a silicon oxide (SiOₓ: 10 nm) formed from silicone oil / a p type semiconductor layer composed of NiO formed by the sputtering technology. The amount of discharged charge of the structure B is 1.2 µA/cm², for example.

As shown in Fig. 4, the secondary battery according to the first embodiment having a structure C includes an n type semiconductor layer 14 composed of a titanium oxide (TiO₂ (IV)) formed by the sputtering technology / a negative-electrode active material layer 16 composed of a titanium oxide formed from titanium fatty acid and a silicon oxide formed from silicone oil / a solid electrolyte layer 18 composed of a tin oxide (II) and a silicon oxide (SiOₓ + SnO) formed from tin fatty acid and silicone oil / a positive-electrode active material layer 22 composed of Ni(OH)₂. The positive-electrode active material layer 22 may be formed by depositing micro crystals of a nickel hydroxide (Ni(OH)₂) on a upper surface of the solid electrolyte layer 18. The p type semiconductor layer 24 may be formed by forming NiO on an upper surface of a nickel hydroxide layer by the sputtering technology, after depositing a nickel hydroxide. The amount of discharged charge of the structure C is 17 µAh/cm², for example.

As shown in Fig. 4, the secondary battery according to the second embodiment having a structure D includes an n type semiconductor layer 14 composed of a titanium oxide (TiO₂ (IV)) formed by the sputtering technology / a negative-electrode active material layer 16 composed of a titanium oxide formed from titanium fatty acid and a silicon oxide formed from silicone oil / a solid electrolyte layer 18 composed of a tin oxide (II) and a silicon oxide (SiOₓ + SnO) formed from tin fatty acid and silicone oil / a positive-electrode active material layer 22 composed of Ni(OH)₂/ a p type semiconductor layer 24 composed of a nickel oxide. The amount of discharged charge as an example of the structure D is 19 µAh/cm², for example.

The positive-electrode active material layer 22 composed of the Ni(OH)₂ is formed by an electrical process, after forming a nickel oxide (NiO) on an upper surface of the solid electrolyte layer 18 by sputtering technology. The term "electrical process" used herein means a formation process of repeatedly applying two or more different voltages between the first electrode 12 and the second electrode 26. 0V is included in the two or more voltages.

As shown in Fig. 4, the secondary battery according to the third embodiment having a structure E includes an n type semiconductor layer 14 composed of a titanium oxide (TiO₂ (IV)) formed by the sputtering technology / a negative-electrode active material layer 16 composed of a titanium oxide formed from titanium fatty acid / a solid electrolyte layer 18 composed of a tin oxide (II) formed from tin fatty acid and a silicon oxide (SiOₓ + SnO) formed from silicone oil / a positive-electrode active material layer 22 composed of Ni(OH)₂ / a p type semiconductor layer 24 composed of a nickel oxide (NiO). The amount of discharged charge as an example of the structure E is 24 µA/cm², for example. Similar to the structure D, the positive-electrode active material layer 22 composed of the Ni(OH)₂ is formed by an electrical process, after forming a nickel oxide (NiO) by sputtering technology.

The positive-electrode active material layer 22 in each of the structures D and E may be formed by depositing micro crystals of a nickel hydroxide (Ni(OH)₂) on a upper surface of the solid electrolyte layer 18. An equivalent amount of the discharged charge can be obtained even by forming NiO on the upper surface of the nickel hydroxide layer by the sputtering technology to form the p type semiconductor layer 24, after depositing the nickel hydroxide.

The positive-electrode active material layer 22 in each of the structures A and B of the comparative examples is composed of the nickel oxide (NiO). On the other hand, the positive-electrode active material layer 22 in each of the structure C (embodiments 1) and structure D (embodiments 2) of the first and second embodiments is composed of the nickel hydroxide Ni(OH)₂, and thereby the discharged charge capacity can greatly be increased (refer to Fig. 4).

The solid electrolyte layer 18 in each of the structures A and B of the comparative examples is composed of the silicon oxide (SiOₓ). On the other hand, the solid electrolyte layer 18 in the third embodiment is formed by adding the metallic oxide to the silicon oxide (SiOₓ), and thereby the discharged charge capacity can greatly be increased. By adding the metallic oxide thereto, at least one selected from the group consisting of the proton, the hydroxide ion (OH⁻), and the hydronium ion (H₃O⁺) can be easily to be transferred, and thereby the amount of the discharged charge can be increased (refer to Fig. 4).

Moreover, as clearly from the comparison between the structure A and the structure B of the comparative examples, the discharged charge capacity can be further increased when the negative-electrode active material layer 16 is formed of the titanium oxide and the silicon oxide formed from the titanium fatty acid and the silicone oil, rather than formed of the titanium oxide (TiO₂) formed by the sputtering technology (refer to Fig. 4).

The titanium oxide formed from the titanium fatty acid contains a large amount of the water or hydroxyl group (-OH). Accordingly, at least one selected from the group consisting of the proton, the hydroxide ion (OH⁻), and the hydronium ion (H₃O⁺) can be easily to be transferred, and thereby the amount of the discharged charge can be increased.

The amount of the water or hydroxyl group (-OH) can further be increased by composing the negative-electrode active material layer 16 from the titanium oxide and the silicon oxide formed by adding the silicone oil to the titanium fatty acid.

Furthermore, as clearly from the comparison between the structure D and the structure E, the amount of discharged charge of the negative-electrode active material layer 16 not containing the silicon oxide (structure E) can further be increased, compared with the negative-electrode active material layer 16 containing the silicon oxide (structure D). It is assumed that this is because the titanium oxide in the negative-electrode active material layer 16 not containing the silicon oxide of the same film thickness can be increased and thereby the atomic weight of titanium which is concerned in the charge and discharge can be increased.

As mentioned above, comparing between the amount of discharged charge in each of the comparative examples (structures A and B) and the amount of discharged charge in each of the first to third embodiments (structures C to E) with one another, the minimum configuration of the secondary battery capable of increasing the amount of discharged charge is a configuration of providing at least one layer of the following (1) to (4).
(1) A negative-electrode active material layer composed of a titanium oxide including water or hydroxyl group (-OH) or a titanium oxide including water or hydroxyl group (-OH), and a silicon oxide.
(2) A positive-electrode active material layer mainly composed of nickel hydroxide (Ni(OH)₂).
(3) A solid electrolyte layer to which a metallic oxide (tin oxide (II), tantalum oxide, zirconium dioxide, aluminium oxide, or the like) containing at least one of water and hydroxyl group (-OH) is added to a silicon oxide.
(4) A solid electrolyte layer containing at least one of a tantalum oxide, a zirconium dioxide, and an aluminium oxide.
(5) A solid electrolyte layer to which phosphorus or a phosphorus oxide is further added to the solid electrolyte layer shown in the above-mentioned (3) or (4).

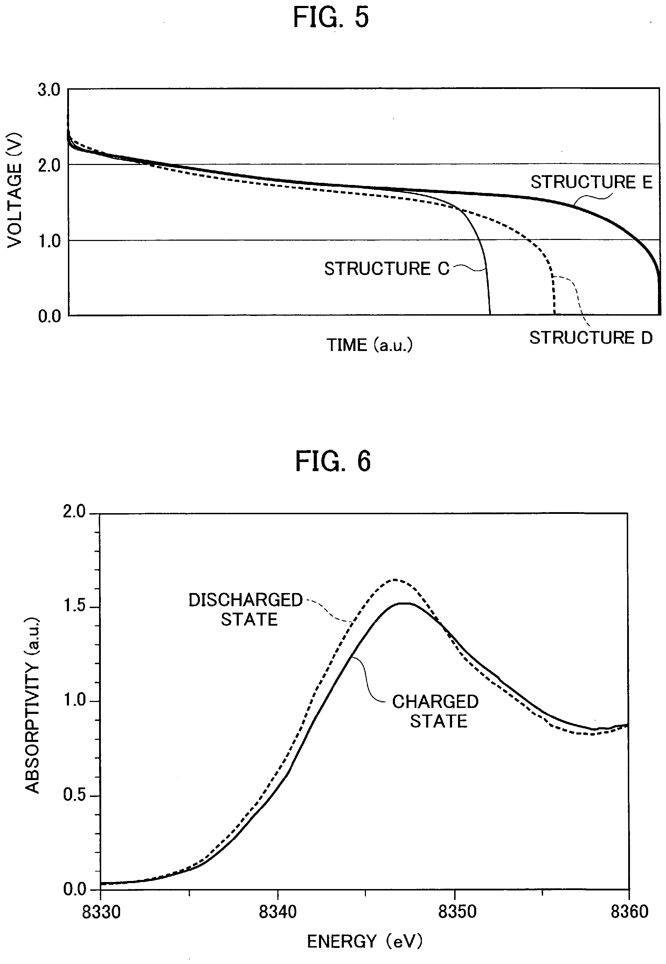

Fig. 5 shows waveform examples of a constant current discharge. Comparing between the structures C and D with each other, an increase in a discharging time is observed in the structure D in which the p type semiconductor layer 24 is formed on the positive-electrode active material layer 22. Furthermore, comparing between the structures D and E with each other, a further increase in the discharging time is observed in the structure E not containing a silicon oxide (SiOₓ) in the negative-electrode active material layer 16.

The effect of each layer will be clear by the following evaluation results. Note that the sample for evaluation has a film thickness of each layer suitable for the evaluating method, and is not always the same as the film thickness of the sample in which the amount of discharged charge is shown.

### (Positive-Electrode Active Materials)

It is estimated that the positive-electrode active material which effectually acts on charge and discharge is Ni(OH)₂. Fig. 6 shows an example of an evaluation result of valence of nickel atoms by the XAFS measurement in a discharged state and a charged state (discharged state and charged state, Ni K-edge XANES). The nickel hydroxide (Ni(OH)₂) layer is formed by applying the electrical process to a nickel oxide (NiO) formed by the sputtering technology. The measurement is performed on a structure of nickel of the positive-electrode active material layer 22 of the nickel hydroxide (Ni(OH)₂), and p type semiconductor layer 23 of the nickel oxide (NiO). The measuring sample is made for the XAFS measurement and the film thickness of each layer is different from the film thickness of each layer of the sample having the amount of discharged charge shown in Fig. 4. A fluorescent X-ray analysis is used for the XAFS measurement.

In Fig. 6, the energy of incident X ray is illustrated in the range of 8330 (eV) to 8360 (eV) near the Ni K absorption edge. Although the average valence of nickel is 2.0 in the discharged state, the average valence is 2.3 in the charged state and an increase in valence is shown. It is assumed that when it shifts from the discharged state to the charged state, the valence of nickel of the positive-electrode active material layer having the nickel hydroxide (Ni(OH)₂) is changed from divalent to trivalent as the comparison with the rising curve of Ni (which is already-known substance) K-edge (rising curve of K-edge absorption).

### (Solid Electrolyte Layer)

The solid electrolyte composed of the silicon oxide (SiOₓ) containing the tin oxide (II) (SnO) is used for the solid electrolyte layer 18 composed of the silicon oxide, and thereby the amount of discharged charge is greatly increased.

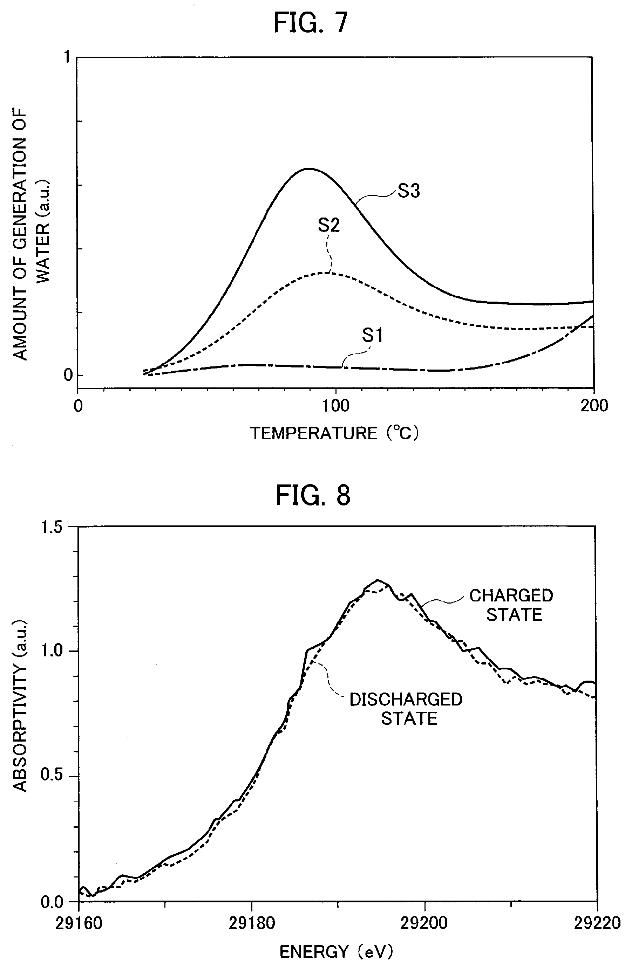

Fig. 7 shows a relationship between an amount of generation of water and a temperature by TPD-MS, in solid electrolytes 1 and 2 containing SnO and a solid electrolyte not containing SnO. In Fig. 7, the curve S1 corresponds to the solid electrolyte not containing SnO, and curves S2 and S3 respectively correspond to the solid electrolytes 1 and 2 containing SnO. In Fig. 7, the numerical value in the peak level of each curve corresponds to the temperature (°C) on the horizontal axis.

From the result of the TPD-MS, it is proved that the solid electrolytes 1 and 2 containing SnO includes at least one of water (H₂O) and hydroxyl group (-OH). The forming conditions of the two samples, the solid electrolytes 1 and 2, are different from each other. The solid electrolyte 1 containing SnO has a large amount of discharged charge.

Fig. 8 shows an example of evaluation result of valence of Sn in the solid electrolyte layer by XAFS measurement (discharged state and charged state, Sn K-edge XANES). In Fig. 8, the energy of incident X ray is illustrated in the range of 29160 (eV) to 29220 (eV) near the Ni K absorption edge. From the measurement of XAFS, the valence of Sn in the solid electrolyte layer is divalent in each of the charged state and the discharged state, and no change thereof is observed.

It is considered that SnO is not an active material of the positive electrode or the negative electrode, but the solid electrolyte layer contains a large amount of water by containing SnO, and thereby making protons or water easy to be transferred. Since Sn is divalent, it is shown as SnO, but it may be different from the normal structure of SnO.

### (Negative-Electrode Active Material Layer)

### - Difference between TiOₓ and TiOₓ+SiOₓ as negative-electrode active material layer -

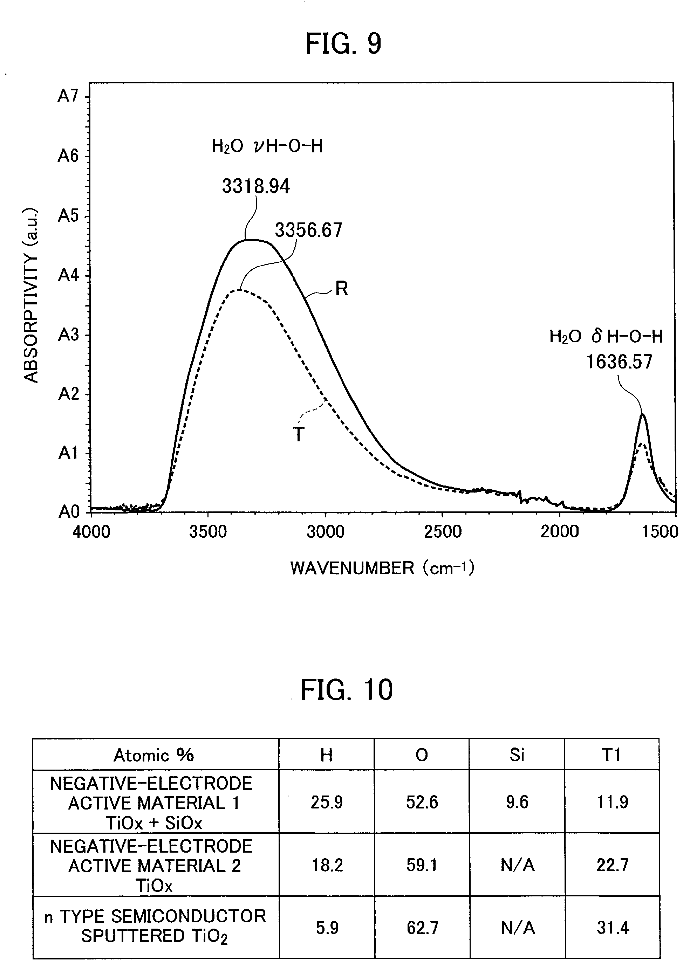

Fig. 9 shows a characteristic example of a Fourier transform infrared (FTIR) a case of applying a negative-electrode active material 1 (TiOₓ + SiOₓ) formed from titanium fatty acid and silicone oil as the negative-electrode active material layer 16 (the curve R), and a case of applying a negative-electrode active material 2 (TiO_{X}) formed from titanium fatty acid as the negative-electrode active material layer 16 (the curve T). The numerical value corresponding to the peak of each of the curve R and curve T in Fig. 9 expresses a wavenumber (cm⁻¹). It is considered that, in both cases, a peak derived from the water (H₂O) appears, and the solid electrolyte layer contains a large amount of water, and thereby making the proton, hydroxide ion (OH⁻), or hydronium ion (H₃O⁺) easy to be transferred.

In the result of the FTIR when SiOₓ is contained in the negative-electrode active material layer 16, absorption of water is increased by adding SiOₓ thereto. However, since there is no SiOₓ which does not contribute to charge and discharge when the SiOₓ is not contained in the negative-electrode active material layer 16, the amount of discharged charge is increased in the case of containing no SiOₓ when the negative-electrode active material layer has the same film thickness.

Fig. 10 shows an example of elemental composition ratios of the negative-electrode active material 1 (TiOₓ + SiOₓ) and the negative-electrode active material 2 (TiOₓ). The analysis is executed by means of Rutherford Backscattering Spectroscopy (RBS) / Hydrogen Forward scattering Spectrometry (HFS).

The ratio of H of the negative-electrode active material 1 is 26% and the ratio of H of the negative-electrode active material 2 is 18%, and it is suggested that the negative-electrode active material 1 containing SiOₓ contains a large amount of water or a large amount of hydroxyl group, also from the RBS / HFS analysis result. The ratio between Ti and Si of the negative-electrode active material 1 is approximately 5:6. In addition, in the negative-electrode active material 1 formed of (TiOₓ + SiOₓ) to which SiOₓ is added, the amount of hydrogen is further increased as compared with the negative-electrode active material 2. The negative-electrode active material contributed to the amount of discharged charge is a titanium oxide containing a large amount of water or a large amount of hydroxyl group.

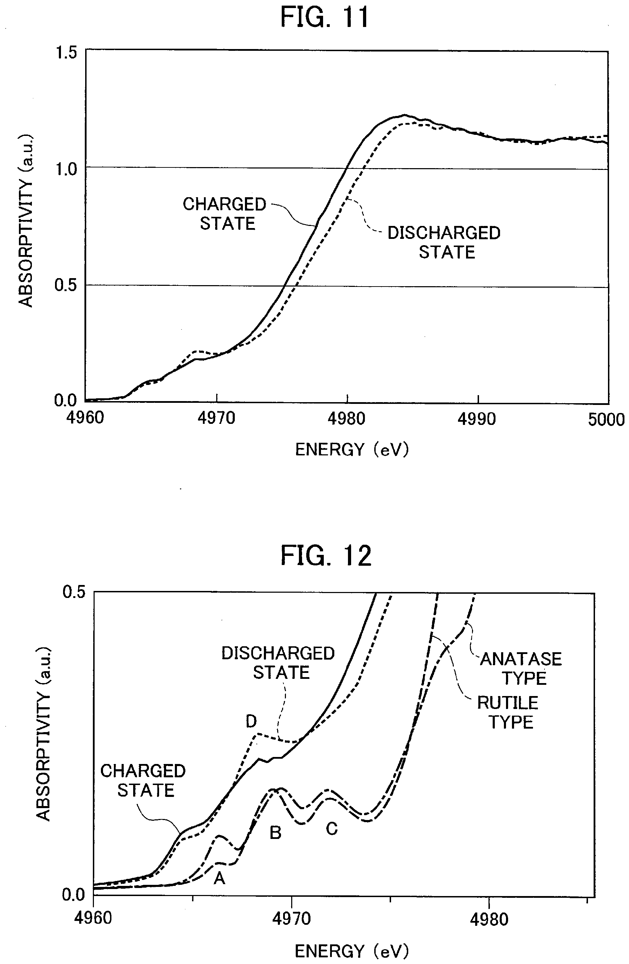

Fig. 11 shows an example of an evaluation results of valence by XAFS measurement (Ti K-edge XANES) in the discharged state and the charged state. In Fig. 11, the energy of incident X ray is illustrated in the range of 4960 (eV) to 5000 (eV) near the Ti K absorption edge.

The valence of the titanium during the discharged state is 3.2 and the valence is changed to 3.0 during the charged state. It is considered that trivalent and quadrivalent of titanium are mixed during the discharged state. It is considered that the tetravalent titanium in the negative-electrode active material layer is changed to the trivalent titanium by shifting from the discharged state the charged state.

Fig. 12 shows an enlarged view of shapes of XAFS pre-peaks in the charged state and the discharged state of the negative-electrode active material layer.

Fig. 12 corresponds to an enlarged view in which energy is near 4960 (eV) to 4980 (eV). The curves respectively express TiO₂ (rutile type) and TiO₂ (anatase type). Moreover, in Fig. 12, the charged state is expressed by the solid line and the discharged state is expressed by the dashed line.

Comparing the shape of the pre-peak in the charged state and the shape of the pre-peak in discharged state of the negative-electrode active material layer functioning as a charge layer, the peak D appears in the discharged state and the peak D is reduced in the charged state. This peak D is a peak observed in the anatase type and the rutile type of TiO₂, and is different from the peak A, peak B, and peak C.

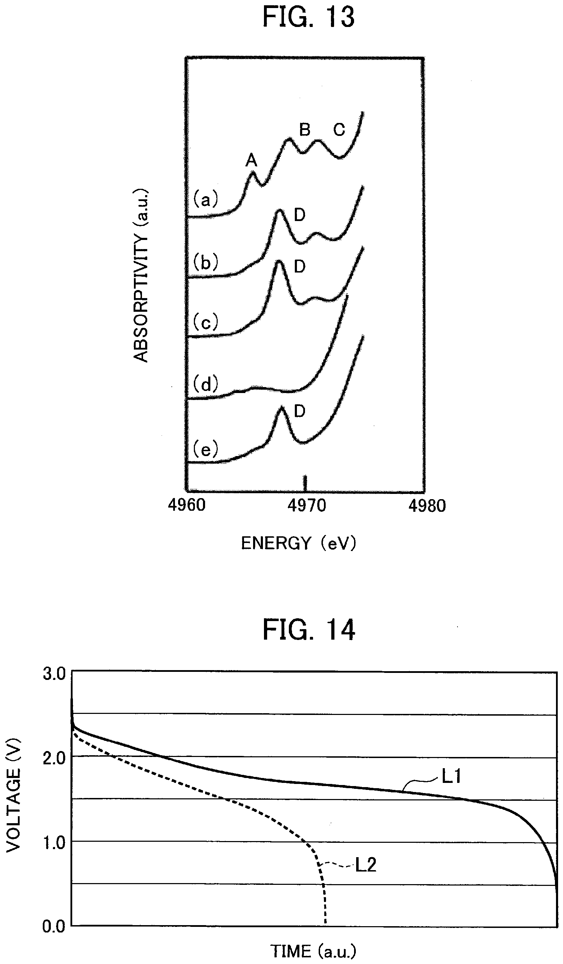

On the other hand, a shape of the pre-peak as shown in Fig. 13 has been reported in Fig.2 of the paper of T. Miyanaga, I. Watanabe, and S. Ikeda, "Structures of Hydrated Titanium and Vanadium Ions in Aqueous Solutions Studied by X-Ray Absorption Spectroscopy", Bulletin of the Chemical Society of Japan, 63, 3282-3287 (1990). More specifically, it is a diagram corresponding to am example of the pre-peak of the Ti K-edge XANES spectrum. In Fig. 13, the curve (a) corresponds to anatase, the curve (b) corresponds to titanium sulfate hydrate, the curve (c) corresponds to titanium sulfate aqueous solution (quadrivalent), the curve (d) corresponds to Ti ion dissolved in sulfuric acid (trivalent), and the curve (e) corresponds to Ti ion dissolved in sulfuric acid (trivalent + quadrivalent).

Three peaks, A, B, and C, are verified in the anatase of the curved (a). On the other hand, in the titanium sulfate hydrate of the curved (b), the peak D different from the peaks A, B, and C is verified.

Next, there is a shape of a pre-peak in a state where titanium ion is dissolved in sulfuric acid. The peak D is observed also in the titanium sulfate aqueous solution (quadrivalent) in the curve (c) which is an aqueous solution of titania, and the whole shape is substantially equivalent to that of the hydrate.

On the other hand, the peak D has disappeared in the Ti ion (trivalent) in which trivalent titanium ion is dissolved in the sulfuric acid in the curve (d).

Furthermore, the peak D has appeared in the Ti ion (trivalent + quadrivalent) in which trivalent titanium ion and tetravalent titanium ion are dissolved in the sulfuric acid in the curve (e) since there is quadrivalent titanium ion.

In consideration of the information of the above-mentioned pre-peak, interpreting that the peak D appears in the discharged state but the peak D is reduced in the charged state, it is considered as follows.

The negative-electrode active material layer has a structure of including at least one of the water (H₂O) and the hydroxyl group (-OH), as titanium sulfate hydrate. Therefore, it is estimated that since the peak D appears in the discharged state, titanium is quadrivalent, and then titanium is changed to trivalent as the peak D is reduced due to the charging.

Accordingly, it is estimated that the charge and discharge have occurred due to the valence change of the titanium atoms.

Moreover, it can be estimated that the quadrivalent titanium oxide contains the water or the hydroxyl group as the hydrate. Moreover, it can be estimated that the quadrivalent titanium oxide contains the water or the hydroxyl group as the hydrate.

In addition, a peak indicating crystallinity from the XRD analysis of the negative-electrode active material layer is not obtained, but it is estimated that the titanium oxide is amorphous or is in the state of micro crystallite.

When the titanium oxide formed by the sputtering technology is used for the negative-electrode active material, the amount of discharged charge is extremely small as in the structure A shown in Fig. 4 (comparative example). Since the titanium oxide formed by the sputtering technology contains almost no water (H₂O) and crystallinity is observed, it is estimated that the valence change is hard to occur at the time when the discharged state is changed to the charged state as the negative-electrode active material.

### (n type Semiconductor Layer)

Fig. 14 shows a discharge waveform of the structure D and a discharge waveform of a structure in which the n type semiconductor layer is removed from the structure D. The discharge waveform of the structure D is L1, and the discharge waveform of the structure in which the n type semiconductor layer is removed from the structure D is L2. It is proved that the discharging time is greatly reduced in the structure in which the n type semiconductor layer is removed. Moreover, when a lacking portion of the film imitating a film defect is intentionally formed in the n type semiconductor layer in the structure D, self-discharge characteristics deteriorate.

The discharge energy remaining equal to or greater than 50% after a certain period from the electric discharge is reduced to equal to or less than 20% when the n type semiconductor layer has the lacking portion.

Since the n type oxide layer is composed of the titanium oxide formed by the sputtering technology and contains almost no water, it can prevent the transfer of the protons, the hydroxide ions (OH⁻), or the hydronium ions (H₃O⁺) to the electrode metal can be prevented. That is, the presence of the n type semiconductor layer has prevented the trivalent titanium of the negative-electrode active material layer is self-changed to quadrivalent titanium. Moreover, it is estimated that transportation of electrons from the metallic electrode to the negative-electrode active material layer is efficiently realized due to the presence of the n type semiconductor layer.

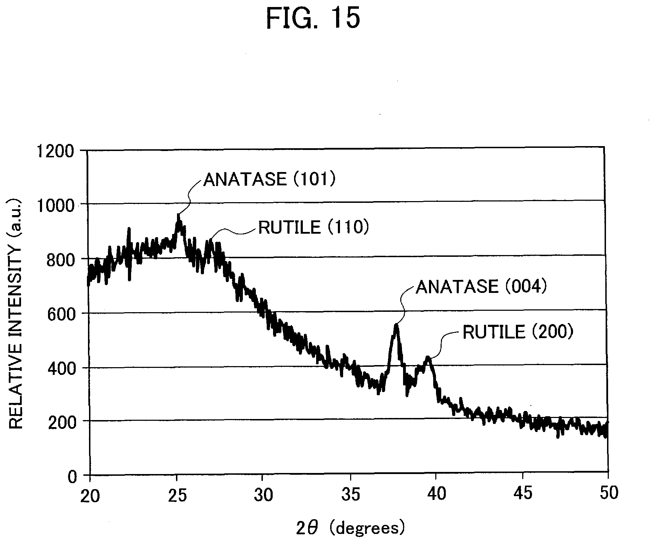

In addition, as for the crystal structure of the n type semiconductor layer, it can be proved from Fig. 15 of the spectrum of XRD that the anatase type crystal structure and rutile type crystal structure are mixed with each other.

### (p type Semiconductor Layer)

As proved from the comparison between the structure C and the structure D shown in Fig. 4, the amount of discharged charge can be increased by adopting the structure of including the p type semiconductor layer on the positive-electrode active material layer. It is estimated that there is effect of preventing the self-change of the trivalent nickel compound in the positive-electrode active material layer by the p type semiconductor layer, and of efficiently transporting the hole from the metallic electrode to the positive-electrode active material layer.

### (Chemical Reaction Model)

Assumed chemical reactions are as follows.

From the result of the XAFS, the divalent nickel of Ni(OH)₂ which is the positive-electrode active material is changed to the trivalent nickel as it is shifted from the discharged state to the charged state. Moreover, the titanium which is the negative-electrode active material is changed from the tetravalent titanium to the trivalent titanium.

Moreover, in the above-mentioned RBS/HFS measurement, the element that being changed from the discharged state to the charged state in the positive-electrode active material layer and the negative-electrode active material layer is only hydrogen (H), and there are observed the decrease in the hydrogen (H) in the negative-electrode active material layer and the increase in the hydrogen (H) in the positive-electrode active material layer.

At the positive electrode side, a change from Ni(OH)₂ to NiOOH has occurred between the discharged state and the charged state.

If this change is expressed by a proton transfer model, a chemical reaction of Ni(OH)₂ <=> NiOOH + H⁺ + e⁻ has occurred between the discharged state and the charged state.

On the other hand, if this change is expressed by a hydroxide ion (OH⁻) transfer model, a chemical reaction of Ni(OH)₂ + OH⁻ <=> NiOOH + H₂O + e⁻ has occurred between the discharged state and the charged state.

The valence of Ni is divalent in the discharged state, and the valence of Ni is trivalent in the charged state.

Here, for reference, the same chemical reaction of Ni(OH)₂ + OH⁻ <=> NiOOH + H₂O + e⁻ as the hydroxyl ion transfer model occurs in the nickel hydrogen secondary battery model.

At the negative electrode side, the chemical reaction of TiO₂ to TiO₂H⁻, or the change from TiO₂·xH₂O to TiO(OH) has occurred between the discharged state and the charged state. If this reaction or change is expressed by the proton model, the chemical reaction of TiO₂ + H⁺ + e⁻ <=> TiO₂H + H₂O has occurred between the discharged state and the charged state.

On the other hand, if it is expresses by the hydroxide ion (OH⁻) transfer model, the chemical reaction of TiO₂ + H₂O + e⁻ <=> TiO₂H + OH⁻ has occurred between the discharged state and the charged state. It is estimated that the state at the time of the electric discharge is a state of TiO₂·xH₂O.

The valence of Ti is quadrivalent in the discharged state, and the valence of Ti is trivalent in the charged state.

### (Electromotive Force Model)

A chemical reaction is assumed from a viewpoint of electromotive force, and standard electrode potentials at the positive electrode side and the negative electrode side are calculated. Next, electromotive force is estimated on the basis of the calculated standard electrode potentials.

### - Standard Electrode Potential at Positive Electrode Side -

Assumed chemical reactions at the positive electrode side are as follows.

Ni(OH)₂ + OH⁻ <=> NiO(OH) + H₂O +e⁻

According to this chemical reaction model, using the following (1) and (2), a standard electrode potential E⁰ at the positive electrode side is calculated to be 0.518V from a relationship of the energy in an equilibrium state.
(1) The Δ_{f}G° value of compound and ion (standard Gibbs energy of formation) : Ni(OH)₂: -530 kJmol⁻¹ / H₂O: -157 kJmol⁻¹ / NiOOH: -400 kJmol⁻¹ / OH⁻: -237 kJmol⁻¹
(2) Electrical energy of 2 mol electrons (-FE⁰ = -96500E⁰)

### - Standard Electrode Potential at Negative Electrode Side -

Assumed chemical reactions at the negative electrode side are as follows.

2TiO₂ + H₂O + 2e⁻ <=> Ti₂O₃ + 2OH⁻

According to this chemical reaction model, using the following (3) and (4), a standard electrode potential E⁰ at the negative electrode side is calculated to be -1.33V from a relationship of the energy in an equilibrium state.
(3) The Δ_{f}G° value of compound and ion (standard Gibbs energy of formation): TiO₂: -884 kJmol⁻¹ / H₂O: -157 kJmol⁻¹ / Ti₂O₃: - 1434 kJmol⁻¹ / OH⁻: -237 kJmol⁻¹
(4) Electrical energy of 2 mol electrons: -2FE⁰ = -19300E°

### - Electromotive Force of Secondary Battery -

The electromotive force of the secondary battery is calculated to be 0.518V - (-1.33V) = 1.85V from a difference between the standard electrode potential E⁰ at the positive electrode side and the standard electrode potential E⁰ at the negative electrode side.

For example, in the charging and discharging characteristics of the discharge waveform L1 in the structure D shown in Fig. 14, it is measuring that a discharge start voltage is 2.3V and a voltage during discharge maintains around 1.85V, and then the voltage is reduced and the electric discharge is completed. That is, the electromotive force of the secondary battery shown in the structure D and the electromotive force estimated by the above-mentioned electromotive force model are substantially the same.

### <Working Example 1>

A structure of a secondary battery shown in a working example 1 corresponds to the structure D shown in Fig. 4. More specifically, the secondary battery of the working example 1 has a structure of: including (TiOₓ + SiOₓ) formed from titanium fatty acid and silicone oil as a negative-electrode active material; including (SiOₓ + SnO) formed from silicone oil and tin fatty acid as a solid electrolyte; and including a layer in which Ni(OH)₂ is deposited as a positive-electrode active material.

### (Fabrication Method)

A sample of the secondary battery having the above-mentioned structure is made for a plurality of film thicknesses within the ranges described below.

On a 6-inch silicon wafer, 300 nm-thick W is formed by the sputtering technology (hereafter, abbreviated as sputtering) as the negative electrode film, and 50 to 300 nm-thick TiO₂ is formed thereon by the sputtering technology as the n type semiconductor layer.

Next, (TiOₓ + SiOₓ) having a thickness of 200 nm to 1 µm is formed as the negative-electrode active material layer on the n type semiconductor layer by a coating and heat of decomposition method.

Next, (SiOₓ + SnO) having a thickness of 50 to 300 nm as the solid electrolyte layer is formed on the negative-electrode active material. The solid electrolyte layer is formed by coating, drying and firing a mixed chemical solution of silicone oil and tin fatty acid in the atmosphere, and is also irradiated by ultraviolet (UV) having a wavelength of 254 nm in the atmosphere, and by removing carbon remaining in the fired layer. At this time, water or hydroxyl group (-OH) is taken into the solid electrolyte.

Furthermore, Ni(OH)₂ having a thickness of 200 nm to 1 µm is deposited as the positive-electrode active material layer on the solid electrolyte layer, and Al having a thickness of 300 nm is formed by sputtering as the positive electrode film on the Ni(OH)₂ film which is the positive-electrode active material layer.

The Ni(OH)₂ is formed by depositing micro crystallite of nickel hydroxide on an upper surface of the solid electrolyte layer.

### (Measurement of Discharged Capacity)

In order to confirm the charge/discharge performance of the secondary battery, when a discharged capacity is measured by performing constant current discharge after applying a voltage of 2.7V to the secondary battery according to the working example 1 for 90 seconds, the discharged capacity is 17 µAh/cm².

### <Working Example 2>

A working example 2 has a structure of further including a p type semiconductor layer in the secondary battery of the working example 1. More specifically, the working example 2 has a structure of including the p type semiconductor layer between the positive-electrode active material and the positive electrode film of the secondary battery which is shown in the working example 1.

### (Fabrication Method)

A sample of the secondary battery having the above-mentioned structure is made for a plurality of film thicknesses within the ranges described below.

On a 6-inch silicon wafer, 300 nm-thickness W is formed by sputtering as the negative electrode film, and TiO₂ is formed thereon by sputtering as the n type semiconductor layer.

Next, (TiOₓ + SiOₓ) having a thickness of 200 nm to 1 µm is formed as the negative-electrode active material layer on the n type semiconductor layer by a coating and heat of decomposition method.

Next, (SiOₓ + SnO) having a thickness of 50 to 300 nm as the solid electrolyte layer is formed on the negative-electrode active material. The solid electrolyte layer is formed by coating, drying and firing a mixed chemical solution of silicone oil and tin fatty acid in the atmosphere, and is also irradiated by ultraviolet (UV) having a wavelength of 254 nm in the atmosphere, and by removing carbon remaining in the fired layer. At this time, water or hydroxyl group (-OH) is taken into the solid electrolyte.

Furthermore, NiO having a thickness of 200 nm to 1 µm is formed on the solid electrolyte layer by sputtering as the p type semiconductor layer, and then Al having a thickness of 300 nm is formed on the p type semiconductor layer by sputtering as the positive electrode film. Furthermore, Ni(OH)₂ having a thickness of 100 nm to 500 µm is formed as the positive-electrode active material layer by repeatedly applying two or more different voltages between the negative electrode film and the positive electrode film. The voltages, for example, 3V (5 seconds) → -3V (2 seconds) → 5V (0.5 second) → -0.4V (4.5 seconds) as one cycle TC, are applied approximately 300 cycles to approximately 5000 cycles, for example. Thereby, the Ni(OH)₂ layer can be formed on the NiO solid electrolyte layer.

The positive-electrode active material layer may be formed by depositing micro crystals of a nickel hydroxide (Ni(OH)₂) on a upper surface of the solid electrolyte layer.

### (Measurement of Discharged Capacity)

In order to confirm the charge/discharge performance of the secondary battery, when a discharged capacity is measured by performing constant current discharge after applying a voltage of 2.7V to the secondary battery according to the working example 2 for 90 seconds, the discharged capacity is 19 µAh/cm².

### <Working Example 3>

The working example 3 has substantially the same structure as that of the secondary battery shown in the working example 2. However, it is different from the working example 2 in that the negative-electrode active material of the working example 3 contains no SiOₓ but is composed of TiOₓ.

### (Fabrication Method)

A sample of the secondary battery having the above-mentioned structure is made for a plurality of film thicknesses within the ranges described below.

On a 6-inch silicon wafer, 300 nm-thickness W is formed by sputtering as the negative electrode film, and TiO₂ is formed thereon by sputtering as the n type semiconductor layer.

Next, TiOₓ having a thickness of 200 nm to 1 µm is formed as the negative-electrode active material layer on the n type semiconductor layer by a coating and heat of decomposition method. Since the fabrication method after the negative-electrode active material layer is substantially the same as that of the working example 2, the description is omitted.

### (Measurement of Discharged Capacity)

In order to confirm the charge/discharge performance of the secondary battery, when a discharged capacity is measured by performing constant current discharge after applying a voltage of 2.7V to the secondary battery according to the working example 2 for 90 seconds, the discharged capacity is 24 µAh/cm².

### [Other embodiments]

As explained above, the embodiments have been described, as a disclosure including associated description and drawings to be construed as illustrative, not restrictive. This disclosure makes clear a variety of alternative embodiments, working examples, and operational techniques for those skilled in the art.

Such being the case, the embodiments cover a variety of embodiments, whether described or not.

### INDUSTRIAL APPLICABILITY

The secondary battery according to the embodiments can be utilized for various consumer equipment and industrial equipment, and can be applied to wide applicable fields, such as secondary batteries for system applications capable of transmitting various kinds of sensor information with low power consumption, e.g. communication terminals and secondary batteries for wireless sensor networks.

### Reference Signs List

- 12:: First electrode (E1) (negative electrode)
- 14:: N type semiconductor layer (TiO₂ layer)
- 16:: Negative-electrode active material layer (TiOₓ and SiOₓ)
- 16T:: Negative-electrode active material layer (TiO_{X})
- 18:: Solid electrolyte layer (SiOₓ + SnO)
- 22:: Positive-electrode active material layer (Ni(OH)₂ layer)
- 24:: P type semiconductor layer (NiO layer)
- 26:: Second electrode (E2) (positive electrode)
- 30:: Secondary battery

## Claims

1. A secondary battery comprising:
a solid electrolyte layer including at least one of water (H₂O) and hydroxyl group (-OH);
a positive-electrode active material layer disposed on an upper surface of the solid electrolyte layer, the positive-electrode active material layer containing nickel hydroxide as a positive-electrode active material;
a second electrode disposed on an upper surface of the positive-electrode active material layer;
a negative-electrode active material layer disposed on a lower surface of the solid electrolyte layer so as to be opposite to the positive-electrode active material layer, the negative-electrode active material layer containing a titanium oxide compound including at least one of water (H₂O) and a hydroxyl group (-OH) as a negative-electrode active material; and
a first electrode disposed on a lower surface of the negative-electrode active material layer so as to be opposite to the second electrode.

2. The secondary battery according to claim 1, further comprising
a p type oxide semiconductor layer between the positive-electrode active material layer and the second electrode.

3. The secondary battery according to claim 2, wherein
the p type oxide semiconductor layer is composed of a nickel oxide having a crystal structure.

4. The secondary battery according to any one of claims 1-3, wherein
the negative-electrode active material layer further includes a silicon oxide.

5. The secondary battery according to any one of claims 1-4, wherein
n the negative-electrode active material layer, at least one selected from the group consisting of a proton (H⁺), a hydroxide ion (OH⁻) , and a hydronium ion (H₃O⁺) can be transferred, and valence of titanium atoms is changed during the charge and discharge.

6. The secondary battery according to claim 5, wherein
the titanium oxide compound includes a mixture of trivalent and tetravalent titanium atoms, and further includes water (H₂O) or a hydroxyl group (-OH) around the titanium atoms.

7. The secondary battery according to claim 5 or 6, wherein
the titanium oxide compound is one structure selected from the group consisting of an amorphous structure and a micro crystallite structure.

8. The secondary battery according to any one of claims 5-7, wherein
the titanium oxide compound is formed by coating and firing titanium fatty acid

9. The secondary battery according to any one of claims 1-8, wherein
the solid electrolyte layer includes a silicon oxide added with a hydratable metal oxide in which at least one selected from the group consisting of a proton, a hydroxide ion (OH⁻), and a hydronium ion (H₃O⁺) can be transferred.

10. The secondary battery according to claim 9, wherein
the hydratable metal oxide is one selected from the group consisting of a tin oxide (II), a tantalum oxide, a zirconium dioxide, and an aluminium oxide.

11. The secondary battery according to any one of claims 1-8, wherein
the solid electrolyte includes at least one selected from the group consisting of a tantalum oxide, a zirconium dioxide, and an aluminium oxide.

12. The secondary battery according to any one of claims 9-11, wherein
the solid electrolyte layer includes one selected from the group consisting of phosphorus and a phosphorus oxide.

13. The secondary battery according to any one of claims 1-12, further comprising
an n type oxide semiconductor layer inserted between the negative-electrode active material layer and the first electrode.

14. The secondary battery according to claim 13, wherein
the n type oxide semiconductor layer is composed of a titanium oxide, the titanium oxide including at least one crystal structure selected from the group consisting of a rutile type crystal structure and an anatase type crystal structure.

15. The secondary battery according to claim 13, wherein
the n type oxide semiconductor layer includes at least one crystal structure selected from the group consisting of a rutile type crystal structure and an anatase type crystal structure, and includes an oxide semiconductor containing a small amount of water (H₂O) and a small amount of hydroxyl group (-OH).

16. The secondary battery according to any one of claims 3-15, wherein
after forming a nickel oxide on the upper surface of the solid electrolyte layer and forming the second electrode on an upper surface of the nickel oxide, the nickel hydroxide is electrically formed between the solid electrolyte layer and the nickel oxide.

17. The secondary battery according to claim 16, wherein
the being electrically formed is a formation process of repeatedly applying two or more different voltages between the first electrode and the second electrode.

18. The secondary battery according to any one of claims 1-15, wherein
the nickel hydroxide is formed by depositing micro crystallite of nickel hydroxide making the upper surface of the solid electrolyte layer.
